# EUROPEAN PATENT APPLICATION

(11) **EP 3 185 195 A1**
(43) Date of publication of application: **28.06.2017**
(21) Application number: 15202473.3
(22) Date of filing: 23.12.2015
(51) Int. Cl.: G06Q 20/40

(54) **METHOD AND SYSTEM FOR CROSS-AUTHORISATION OF A FINANCIAL TRANSACTION MADE FROM A JOINT ACCOUNT**

(71) Applicant: MasterCard International Incorporated, Purchase, NY 10577-2509 (US)
(72) Inventor: NOWAK, Dawid, Dublin, 15 (IE); GROARKE, Peter, Dublin, 18 (IE); ALLEN, John, Dublin, 16 (IE)
(74) Representative: Grau, Benjamin

(57) **Abstract**

A method for cross-authorisation of a financial transaction made from a joint account of at least a first co-owner and a second co-owner, the method comprising: requesting, at a first terminal executing or connected to a transaction processing system, by the first co-owner of the joint account processing of a financial transaction to be made from the joint account, transmitting, from the transaction processing system, the request for the financial transaction to an access control server, determining, at the access control server, at least the second co-owner of the joint account, requesting, from the access control server, authorisation of the financial transaction from the at least second co-owner at a second terminal, and transmitting, responsive to the authorisation, by the at least second co-owner at the access control server, confirmation for processing the financial transaction to the financial transaction system.

## Description

### Technical Field

The present disclosure relates to the field of financial transactions made from a financial account owned or used by more than one person. More particularly, the present disclosure relates to a method and a system for authorizing financial transactions initiated by one owner of a joint account and which needs to be authorized for processing by at least another owner of the joint account. Moreover the disclosure relates to a computer program product and a computer readable medium. The computer readable medium comprises computer-executable instructions, which, when executed by the respective devices being equipped with processors cause the devices to perform the method steps of the disclosure on the respective device interacting with the respective other device.

### Background

Financial transactions have become more and more important in daily life. Examples for such financial transactions are, amongst others, e.g. cashless payment at a point-of-sale or on a website, or cash withdrawal at an ATM machine, e.g. making use of a credit card or a debit card. These kind of financial transactions provide great flexibility to the owner of the financial account, however, due to the at least partial electronic handling, risks of fraud exist.

In business environments but also in personal day to day life, often multiple person function as co-owners or are listed as authorized user of a financial account which is than considered as a joint account. While it is possible and common practise to limit some or all cards associated with an financial account to a certain transaction limit, or for certain procedures only, e.g. cash withdrawal at an ATM machine, control of transactions initiated by one owner or user of an account on a case to case basis by another owner or user of the account in an automated as and inherent feature of a system is not possible. The term owner and user may be used interchangeably. In addition, if an unauthorized third party gains possession of a credit card associated to a financial account or of the relevant credit card information, the card might be used illegally within the general limit associated to said card until the card gets blocked by an owner of the account.

Accordingly, in the light of the increasing use of e-commerce and the increasing number of online purchases, there is a need for an improved system in order to enhance scalability, and user friendliness while security standards are at least maintained or preferably improved.

### Summary of the invention

The present disclosure provides one or more solutions to the problems and disadvantages of the background art. Other technical advantages of the present disclosure will be readily apparent to one skilled in the art from the following description and claims.

The present disclosure is directed to a computer implemented method for cross-authorizing financial transactions made from a joint account, the method comprising:
- requesting, at a first terminal executing or connected to a transaction processing system, by the first co-owner of the joint account processing of a financial transaction to be made from the joint account;
- transmitting, from the transaction processing system, the request for the financial transaction to an access control server;
- determining, at the access control server, at least the second co-owner of the joint account;
- requesting, by the access control server, authorisation of the financial transaction from the at least second co-owner at a second terminal;
- transmitting, responsive to the authorisation, by the at least second co-owner at the access control server, confirmation for processing the financial transaction to the first terminal.

The present disclosure includes multiple aspects for authorisation of financial transactions to be made from a joint account requested by one user or owner of the account and to be approved and authorized by a second user or owner of the account. Non-limiting examples for financial transactions may be the request for cashless payment at a point-of-sale, the request for online-payment in e-commerce, or the request for cash withdrawal at an ATM machine. The joint account may be linked to a credit card or a debit card issued by a card issuer. The joint account may be owned by at least two co-owners or at least two users of the account may be authorised for making financial transactions from the account, independently from being the owner of the account. The financial transaction may be any form of transfer of money from the respective account, e.g. requests for processing payments made on e-commerce, cashless payments at point-of-sales making use of a credit card or a debit card, cash withdrawals at an ATM machine, bank transfers to be processed from the account and the like. A transaction processing system may be any hardware and/or software interface used to receive, transmit and/or process the request for the financial transaction initiated by the user. Accordingly, the transaction processing system may be a point-of-sale interface communicating with a payment service provider, capable of receiving a financial transaction request, a physical credit or debit card or the respective card information and configured to communicate with a payment service provider for processing the payment. Alternatively the transaction processing system may be an ATM machine communicating with a user's bank account. Alternatively, the transaction processing system may be an application implemented in a web store configured to receive and process financial transactions such as payments for online purchases made on the web store. Accordingly, the transaction processing system may be accessed by the user via the first terminal or may be implemented on the first terminal as such.

When a first user of the joint account initiates a financial transaction at a first terminal, the transaction processing system which is associated with the first terminal or operably connected to the first terminal connects to a customer database or to an access control server being connected to a customer database for determination whether the account is a joint account, i.e. whether the account is to be used by at least two authorized users or by at least two co-owners. A first terminal may be any device providing an interface to interact with the transaction processing system and to receive instructions from the first user or owner to initiate a payment, such as smartphones, personal computers, tablet computers configured to execute a respective application or capable to connect to a respective web-service over a network, but also devices like point-of-sale terminals configured to process credit card or debit card payment requests and devices provided by a bank such as ATM machines or transaction terminals. The first terminal may also be capable of determining its geolocation.

When the transaction processing system determines that the account is used by multiple authorized users or is owned by multiple owners, the transaction processing system may send a authorisation request to the access control server for further processing, i.e. for sending authorization request for the respective initiated financial transaction to at least one further user, being different from the first user who initiated the transaction request. In cases in which, responsive to connection by the transaction processing system the access control server determines that the joint account is used by multiple authorized users or is owned by multiple owners, and sends a authorization request for the respective initiated financial transaction to at least one further user, being different from the first user who initiated the transaction request. Alternatively, an additional authorization request serving as a confirmation request, may be send to the first user who initiated the financial transaction; this request may than be send to the first terminal user by the first user or may be send to a third terminal, being associated to the first user.

When the access control server has determined that the account underlying the initiated financial transaction is a joint account owned by at least two users, or if multiple authorized users of the account have been identified, and, optionally, if the access control server has determined that confirmation for processing of the initiated payment is needed, a request for authorization for processing the financial transaction is transmitted to a second terminal of a second user. This request may include transaction related information, such as purchase details, vendor details, location details, and information related to the first user who has initiated the financial transaction. The request may be send from the access control server to the second terminal using secure communication.

The second terminal may be any device associated to the second user and suitable for receiving and representing the confirmation request to the second user, to receive the confirmation and to transmit the confirmation to the access control server. The second terminal may also be configured to determine its geolocation. Suitable devices may be smartphones, tablet computers and personal computers capable of communication over a network, but also dedicated device used for confirmation purposes only. The second terminal may also include input device, which could also be means for capturing any kind of biometric information, such as a fingerprint scanner, a microphone for voice recognition, an eye scanner and the like. The terminal may also include a processor for processing the acquired biometric data.

The confirmation or authorization given by the second user may be in form of a confirmation command or may be based on authentication data of the second user, the authentication data may be in form of the combination of a user name and a password securely identifying the second user and/or in form a biometric data securely identifying the second user. Evaluation of the authentication may be done on the second terminal, such that the respective data is compared with the respective information stored on the second terminal, wherein the data is preferably stored in a secure memory section of the terminal. After positive authentication, a confirmation response is transmitted to the access control server, indicating that the second user has been identified and has confirmed or authorized the financial transaction. Transmittance to the access control server may use secure communication.

Alternatively, authentication of the second user may be done at the access control server or a special authentication server, such that the authentication data acquired by the terminal is transmitted to the respective server for further processing. Transmittance to the access control server may use secure communication.

In another aspect of the present disclosure, the authorisation of the financial transaction is at least given via verification of the identity of the at least second co-owner authenticating the second co-owner. Such a verification of the identity or authentication process could include biometric identification, the provision of personal information of the second user, e.g. answering of a security question, or the like. The authorisation may be performed as an additional step after successful authentication of the second user, prompting the user to authorize the financial transaction. Alternatively, authorisation and authentication may be combined, such that successful authentication will serve as a authorization.

In another aspect of the present disclosure, the authorisation is given responsive to the presentation of the details of the requested financial transaction to the at least second co-owner/user. The details could comprise the merchant to which the payment is to be made, the amount of the payment, the name of the first owner/user which tries to make the payment, and/or the place at which the first owner is located at when trying to make the payment,

In yet another aspect of the present disclosure the transaction process is based on credit or debit card information, such as PAN and/or card security code. The credit or debit card information allows payment at a merchants store as well as on a website and also the withdrawal of cash from an ATM. Alternatively, the transaction process may make use of a physical credit card or debit card, making use of the data stored thereon on a chip and/or on magnetic stripe or any alternative means to store credit or debit card information. Alternatively the transaction may be based on a soft card issued on a respective device such as the first terminal used by the first user.

In another aspect of the present disclosure, the transaction processing system is an application integrated on a merchants website. The application may be in from of a plugin integrated into the respective website providing an interface for the communication, e.g. with a payment service provider or the card issuer's server handling the payment process.

In yet another aspect of the present disclosure the access control server is further configured to store rules relating to the requirements for authorisation of the financial transaction by the at least second co-owner. The access control server may access rules in form of a set of preferences or predetermined parameters defining the necessity of confirmation by another user/owner of the account. These preferences or predetermined parameters are associated to the account and may be stored on the access control server or on a separate database server accessible by the access control server. The preferences or predetermined parameters may define certain financial transactions which do not require authorisation, e.g. depending on the type of transaction, the amount of money to be transferred, the person who initiated the financial transaction, or the location of the first terminal and the second terminal of the second user who would be requested to authorize the transaction. Concerning the latter, when the first terminal serving as a requesting terminal, and the second terminal serving as authorisation terminal are located close to each other, it may be assumed, that the first user and the second user are e.g. in the same shop and therefore directly communicating with each other. In these cases it may be assumed, that the financial transaction is in mutual agreement and therefore need no additional authorisation. Additionally, the users may have different privileges with respect to the joint account. For example, financial transaction initiated by a certain user may not need to be confirmed, whereas financial transactions made by other user may need to be confirmed. This could, e.g. by applied to children, such that only transaction up to a predefined amount can be process without authorization while all the other transactions need authorisation. Alternatively or additionally, the privileges of a user may be limited to certain vendors, e.g. payments made at certain gas stations only, which is a contract partner of a company holding the account, while payments to a non-contract partner need authorisation. Depending on the rules, the authorization process may either be skipped when no authorization is needed for the respective transaction initiated by the first user or may be automatically authorised by the access control server, e.g. in cases of the first terminal and the second terminal being geographically collocated, or in cases wherein the first co-owner is a privileged co-owner of the joint account, in in cases wherein the amount of the financial transaction is below a predetermined threshold.

In yet another aspect of the present disclosure the authentication data for verification of the identity of the at least second co-owner is gathered by the second terminal. The second terminal may be any device associated to the second user and suitable for receiving and representing the confirmation request to the second user, to receive the confirmation and to transmit the confirmation to the access control server. The access control server may store or have access to the relevant information for contacting the second user via the respective second device. This information may be any unique data suitable for identifying and contacting the second terminal, e.g. mobile number used in association with a smartphone or a tablet, a MAC number identifying a network interface used in the device and the like. The terminal may also be configured to determine its geolocation. Suitable devices may be smartphones, tablet computers and personal computers capable of communication over a network, but also dedicated device used for confirmation purposes only. The second terminal may also include input device, which could also be means for capturing any kind of biometric information, such as a fingerprint scanner, a microphone for voice recognition, an eye scanner and the like. The terminal may also include a processor for processing the acquired biometric data.

In another aspect of the present disclosure the identity of the at least second co-owner is verified on the second terminal and the result of the verification is transmitted to the access control server, or authorization for the financial transaction is send to the access control server after authentication of the second user. Accordingly, evaluation of the authentication may be done on the second terminal, such that the respective data is compared with the respective information stored on the second terminal, wherein the data is preferably stored in a secure memory section of the terminal. After positive authentication, a confirmation response is transmitted to the access control server, indicating that the second user has been identified and has confirmed or authorized the financial transaction. Transmittance to the access control server may use secure communication. Alternatively authentication of the second user may be done at the access control server or a special authentication server, such that the authentication data acquired by the terminal is transmitted to the respective server for further processing. Transmittance to the access control server may use secure communication.

The present disclosure is also directed to a system for cross-authorisation of a financial transaction made from a joint account of at least a first co-owner and a second co-owner, the system comprising a first terminal, a transaction processing system, an access control server, and a second terminal, wherein
the first terminal is connected to or executing the transaction processing system, and is configured to receive a request for processing a financial transaction to be made from the joint account;
the transaction processing system is configured to transmit the request for the financial transaction to an access control server;
the access control server is configured to determine at least a second co-owner of the joint account, and, subsequently, to request, at the second terminal, authorisation of the financial transaction from the at least second co-owner, and to transmit, responsive to the authorisation, by the at least second co-owner at the access control server, confirmation for processing the financial transaction to the financial transaction system.

The present disclosure is also directed to a computer program computer program product comprising program instructions for carrying out each of the method steps of the disclosure, when said product is executed on a computer.

Further, the present disclosure is directed to a computer readable medium storing program instructions, which, when executed by a processor of a computer cause the computer to perform each of the method steps of the disclosure.

One advantage that may be realized in the practice of some embodiments of the described methods is that financial transactions initiated and requested by a first user or owner of a joint account can be controlled, approved and authorized by a second user or owner of the joint account. Other technical advantages of the present disclosure will be readily apparent to one skilled in the art from the following description of preferred embodiments and the claims. Various embodiments of the present application obtain only a subset of the advantages set forth. No single advantage is critical to the embodiments. Any claimed embodiment may be technically combined with any other claimed embodiments.

### Brief description of the Drawings

The accompanying drawings illustrate exemplary embodiments of the disclosure and serve to explain, by way of example, the principles of the disclosure.
FIG. 1 shows a flowchart of the authorisation process,
FIG. 2 shows a block diagram showing the entities involved in combination with the steps of the authorisation process in case of a request for online payment made by the first user, and
FIG. 3 shows a block diagram showing the entities involved in combination with the steps of the authorisation process in case of a request for cash withdrawal at an ATM machine made by the first user.

### Detailed description

The present disclosure will now be described more fully hereinafter with reference to the accompanying figures, in which preferred embodiments are shown. The method, however, may be embodied in many different forms and should not be construed as limited to the embodiments set forth herein. It should be noted that these figures are intended to illustrate the general characteristics of the methods utilized in certain embodiments. However, the figures may not precisely reflect the precise structure or performance characteristic of any given embodiment. Moreover, in the figures like reference numerals designate corresponding parts throughout the different views or embodiments.

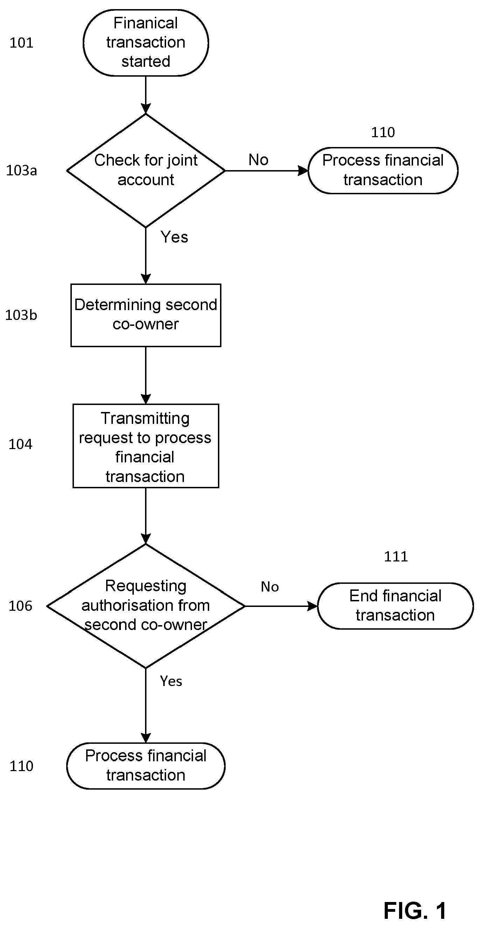

Fig. 1 is a flowchart illustrating the exemplary the overall steps for authorizing, by a second user, a financial transaction initiated by a first user. In step 101 the financial transaction is started by the first user at the first terminal. Responsive the initiation of the request, the financial transaction data including the credit card or account data of the credit card or the account used for the transaction id transmitted to the transaction processing system.

The transaction processing system, at step 103a, checks whether the underlying account is used by multiple authorized users or is owned by multiple owners, i.e. whether the account from which the financial transaction is to be made is a joint account. If no further authorized user or co-owner is determined, the financial transaction, at step 110, will be processed. If a the underlying account is determined to be a joint account, i.e. an account used by multiple authorized users or is owned by multiple owners, the other user(s) or co-owner(s) will be determined, at step 103b.

At step 104 a request for processing the financial transaction is transmitted from transaction processing system to the access control server. With the request, authorisation of the financial transaction is initiated. The access control server, responsive the receiving the request, transmits, at step 106, a authorisation request to the second terminal associated to the second user. If the second user, responsive to the authorisation request, authorized the financial transaction, the financial transaction will be processed at step 110. If the second user dos not authorize the financial transaction, the financial transaction will not be processed end will be terminated.

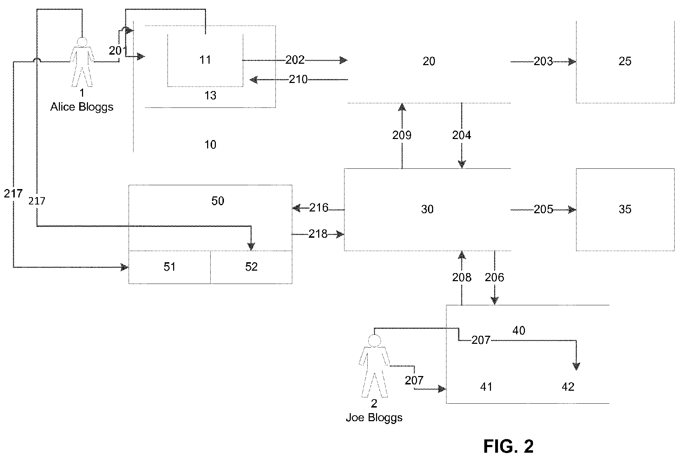

Fig. 2 is block diagram showing the entities involved in combination with the steps of the authorisation process in case of a request for online payment made by the first user and to be authorized by a second user, and, optionally by the first user.

In step 201 the first user, named Alice Blogg in the example, initiates at a first terminal 10 a financial transaction. The first terminal is a personal computer, where an interface 11 to the transaction processing system 20 is accessed through a browser program 13 running on the computer 10. Via the interface, at step 202 credit card and transactions details are entered and transmitted to the transaction processing system 20.

At step 203 the transaction processing system 20 accesses a customer database 25, storing account and user information, to determine whether the account is used by multiple authorized users or is owned by multiple owners, i.e. whether the account from which the financial transaction is to be made is a joint account. If the transaction processing system has determined that the account is a joint account, the transaction processing system 20 sends, at step 204 an authorization request to an access control server 30, the request containing account and user information as well as transaction information.

The access control server 30, responsive the receiving a authorization request, at step 205, connects to a rule database 35, to determine, whether the financial transaction initiated by the first user needs authorization. If the access control server 30 determines that the financial transaction needs to be authorized by a second user, named Joe Bloggs in the example, the access control server 30 sends, at step 206, an authorization request to a second terminal 40, e.g. a mobile device, associated with Joe Bloggs. The second terminal 40 comprises an display for displaying the authorization request to Joe Bloggs and an input device for receiving input by Joe Bloggs responsive to the request. The input device may be a fingerprint scanner 41, a face recognition system 42, a keyboard or combinations thereof.

At step 207, Joe Bloggs reviews the request and rejects or authorizes the request. Review and authorization may require authentication of Joe Bloggs, i.e. verification of his identity. This may be an the basis of an username and password entered through the keyboard or on the basis of biometric data acquired with the fingerprint scanner 41 or the face recognition system 42 being compared with respective authentication data stored in a database. Authentication as such may serve as authorization of the financial transaction.

At step 208, the response by Joe Bloggs to the authorization request, i.e. accept or decline, is sent from the second terminal 40 to the access control server 30.

Additionally, at step 216, a confirmation request containing the transaction information, may be sent to a third terminal 50, associated to Alice Bloggs. The third terminal 50 comprises a display for displaying the authorization request to Joe Bloggs and an input device for receiving input by Joe Bloggs responsive to the request. The input device may be a fingerprint scanner 51, a face recognition system 52, a keyboard or combinations thereof.

At step 217, Alice Bloggs reviews the request and rejects or authorizes the request. Review and confirmation may require authentication of Alice Bloggs, i.e. verification of her identity. This may be an the basis of an username and password entered through the keyboard or on the basis of biometric data acquired with the fingerprint scanner 51 or the face recognition system 52 being compared with respective authentication data stored in a database. Authentication as such may serve as authorization of the financial transaction.

At step 218, the response by Alice Bloggs to the confirmation request, i.e. accept or decline, is sent from the third terminal 50 to the access control server 30.

At step 209, the access control server 30 transmits the result of the authorization request or the aggregated result of the authorization and the confirmation request to the transaction processing system 20. Depending on the result, the transaction processing system processes the financial transaction and informs, at step 210 Alice Bloggs accordingly, by transmitting the result to the first terminal 10. If the financial transaction was rejected either as not being authorized or not being confirmed, Alice Bloggs is informed accordingly at step 210, by transmitting the result to the first terminal 10.

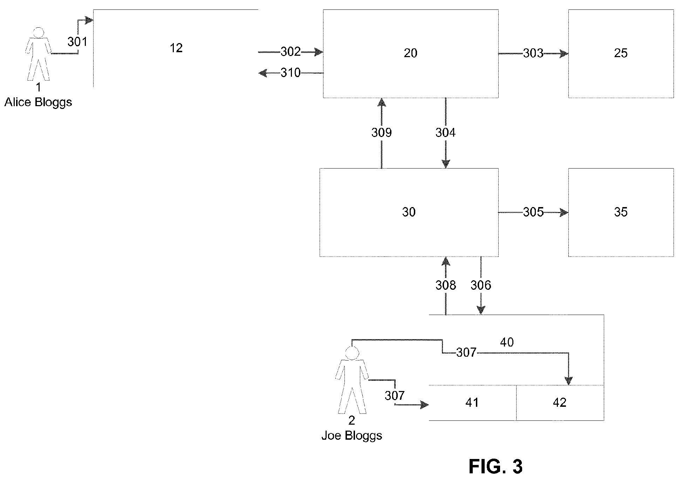

Referring now to Figure 3, showing a block diagram indicating the entities involved in combination with the steps of the authorisation process in case of a request for online payment made by the first user and to be authorized by a second user, and, optionally by the first user.

In step 301 the first user, named Alice Bloggs in the example, initiates at a first terminal 12 a financial transaction. The first terminal is an ATM machine or a point-of-sale terminal being in communication with the transaction processing system 20 is accessed through an interface on the first terminal 12. At step 302 credit card and transactions details are transmitted from the first terminal 12 to the transaction processing system 20.

At step 303 the transaction processing system 20 accesses a customer database 25, storing account and user information, to determine whether the account is used by multiple authorized users or is owned by multiple owners, i.e. whether the account from which the financial transaction is to be made is a joint account. If the transaction processing system has determined that the account is a joint account, the transaction processing system 20 sends, at step 304 an authorization request to an access control server 30, the request containing account and user information as well as transaction information.

The access control server 30, responsive to receiving a authorization request, at step 305, connects to a rule database 35, to determine, whether the financial transaction initiated by Alice Bloggs needs authorization. If the access control server 30 determines that the financial transaction needs to be authorized by a second user, named Joe Bloggs in the example, the access control server 30 sends, at step 206, an authorization request to a second terminal 40, e.g. a mobile device, associated with Joe Bloggs. The second terminal 40 comprises an display for displaying the authorization request to Joe Bloggs and an input device for receiving input by Joe Bloggs responsive to the request. The input device may be a fingerprint scanner 41, a face recognition system 42, a keyboard or combinations thereof.

At step 307, Joe Bloggs reviews the request and rejects or authorizes the request. Review and authorization may require authentication of Joe Bloggs, i.e. verification of his identity. This may be on the basis of an username and password entered through the keyboard or on the basis of biometric data acquired with the fingerprint scanner 41 or the face recognition system 42 being compared with respective authentication data stored in a database. Authentication as such may serve as authorization of the financial transaction.

At step 308, the response by Joe Bloggs to the authorization request, i.e. accept or decline, is sent from the second terminal 40 to the access control server 30.

At step 309, the access control server 30 transmits the result of the authorization request or the aggregated result of the authorization and the confirmation request to the transaction processing system 20. Depending on the result, the transaction processing system processes the financial transaction and informs, at step 210 Alice Bloggs accordingly, by transmitting the result to the first terminal 12. If the financial transaction was rejected either as not being authorized or not being confirmed, Alice Bloggs is informed accordingly at step 310, by transmitting the result to the first terminal 12. Confirmation or rejection information may also be in form of processing information of the initiated financial transaction, e.g. by showing the payment receipt or by effecting the cash withdrawal.

This description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. Method for cross-authorisation of a financial transaction made from a joint account of at least a first co-owner (1) and a second co-owner (2), the method comprising:
a) requesting, at a first terminal (10, 12) executing or connected to a transaction processing system (20), by the first co-owner (1) of the joint account processing of a financial transaction to be made from the joint account;
b) transmitting, from the transaction processing system (20), the request for the financial transaction to an access control server (30);
c) determining, at the access control server (30), at least the second co-owner (2) of the joint account;
d) requesting, from the access control server (30), authorisation of the financial transaction from the at least second co-owner (2) at a second terminal (40);
e) transmitting, responsive to the authorisation, by the at least second co-owner (2) at the access control server (30), confirmation for processing the financial transaction to the financial transaction system (20).

2. Method according to claim 1, wherein authorisation of the financial transaction is at least given via verification of the identity of the at least second co-owner.

3. The method of claim 2, wherein authorisation is given responsive to the presentation of the details of the requested financial transaction to the at least second co-owner (2).

4. Method of claims 2 or 3, wherein the verification of the identity is based on biometric factors.

5. Method according to any of claims 1 to 4, wherein the transaction process is based on credit card information, such as PAN and/or card security code.

6. Method according to claim 5, wherein transaction processing system (20) comprises a merchant plugin integrated on a merchants website.

7. Method according to claims 1 to 4, wherein transaction process is based on a chip or magnetic stripe card.

8. Method according to any of the preceding claims, wherein the access control server (30) is further configured to store rules relating to the requirements for authorisation of the financial transaction by the at least second co-owner (2).

9. Method according to claim 8, wherein the financial transaction is automatically authorised by the access control server (30) in cases of the first terminal (10) and the second terminal (40) being geographically collocated, in cases wherein the first co-owner (1) is a privileged co-owner of the joint account, or in in cases wherein the volume of the financial transaction is below a predetermined threshold.

10. The method according to any of claims 2 to 8, wherein authentication data for verification of the identity of the at least second co-owner (2) is gathered by the second terminal (40).

11. The method according to claim 10, wherein the identity of the at least second co-owner (2) is verified on the second terminal (40) and the result of the verification is transmitted to the access control server (30).

12. The method according to claim 10, wherein the authentication data is transmitted to the access control server (30) for verification of the identity of the at least second co-owner (2).

13. A system for cross-authorisation of a financial transaction made from a joint account of at least a first co-owner (1) and a second co-owner (2), the system comprising a first terminal (10, 12), a transaction processing system (20), an access control server (30), and a second terminal (40), wherein
the first terminal (10, 12) is connected to or executing the transaction processing system (20), and is configured to receive a request for processing a financial transaction to be made from the joint account;
the transaction processing system (20) is configured to transmit the request for the financial transaction to an access control server (30);
the access control server (30) is configured to determine at least a second co-owner (2) of the joint account, and, subsequently, to request, at the second terminal (40), authorisation of the financial transaction from the at least second co-owner (2), and to transmit, responsive to the authorisation, by the at least second co-owner (2) at the access control server (30), confirmation for processing the financial transaction to the financial transaction system (20).

14. A computer program product comprising computer executable instructions embodied in a computer readable medium for performing steps any of the method claims 1 to 12.

15. A computer readable medium storing program instructions, which, when executed by a processor of a computer cause the computer to perform each of the method steps of claims 1 to 12.
